(19) **Europäisches Patentamt European Patent Office Office européen des brevets**

(11) **EP 1 888 209 B1**

(12) **EUROPEAN PATENT SPECIFICATION**

(45) Date of publication and mention
of the grant of the patent:
**29.08.2012 Bulletin 2012/35**

(51) Int Cl.:
*B01D 61/12* [(2006.01)]    *C02F 1/44* [(2006.01)]
*B01D 65/08* [(2006.01)]

(21) Application number: **06761968.4**

(22) Date of filing: **02.06.2006**

(86) International application number:
**PCT/EP2006/005318**

(87) International publication number:
**WO 2006/128730 (07.12.2006 Gazette 2006/49)**

(54) **IMPROVED PROCESS FOR TREATING AN AQUEOUS MEDIUM USING REVERSE OSMOSIS AND REVERSE OSMOSIS SYSTEM THEREFOR**

VERBESSERTES VERFAHREN ZUR BEHANDLUNG EINES WÄSSRIGEN MEDIUMS MITTELS UMKEHROSMOSE UND UMKEHROSMOSESYSTEM DAFÜR

METHODE AMELIOREE DE TRAITEMENT D'UN MILIEU AQUEUX PAR OSMOSE INVERSE, ET SYSTEME D'OSMOSE INVERSE S'Y RAPPORTANT

(84) Designated Contracting States:
**AT BE BG CH CY CZ DE DK EE ES FI FR GB GR HU IE IS IT LI LT LU LV MC NL PL PT RO SE SI SK TR**

(30) Priority: **02.06.2005 EP 05011910**

(43) Date of publication of application:
**20.02.2008 Bulletin 2008/08**

(73) Proprietor: **Toray Membrane Europe AG**
**4142 Münchenstein (CH)**

(72) Inventors:
• **JANK, Manfred**
**06237 Leuna (DE)**

• **MÜLLER, Andrea**
**06112 Halle (DE)**

(74) Representative: **Bohest AG**
**Postfach 160**
**4003 Basel (CH)**

(56) References cited:
**WO-A-03/031034    US-A1- 2003 230 531**

• **PATENT ABSTRACTS OF JAPAN vol. 2003, no. 12, 5 December 2003 (2003-12-05) -& JP 2006 015236 A (TORAY IND INC), 19 January 2006 (2006-01-19)**

**Description**

The present invention relates to reverse osmosis, in particular to an improved process for treating an aqueous medium, which comprises dissolved potentially scale-forming components, using reverse osmosis and a reverse osmosis system therefor.

Reverse osmosis is a membrane separation method which has gained widespread interest in water processing during the recent years, e.g. for the desalination of sea water, the purification of brackish water and the winning of drinking water as well as for the purification of industrial waste waters or the preparation of pure and ultra-pure water for various industrial applications.

In a reverse osmosis system the dissolved substances are removed from a usually aqueous medium like an aqueous solution comprising one or more compounds dissolved therein in form of ions and are separated from the solvent by pressing said solution under high pressure through a semipermeable membrane which very selectively allows solvent molecules to pass through the membrane forming the so-called permeate which is substantially free of any impurities like dissolved ions originally present in the feed solution. The impurities on the other side are retained in a concentrate, the so-called retentate, which is accordingly richer in dissolved matter than the feed solution.

A rather severe problem associated in particular with a continuous long-term operation of reverse osmosis systems is the control or rather the prevention of deposits in the system, in particular deposits forming on that surface of the membrane facing the retentate. Such deposits are caused by certain components in the feed solution. Besides the so-called "fouling" which means the deposition of predominantly organic suspended matter, colloids and micro-organisms on the membrane, "scaling", that is the formation of inorganic precipitates, is a major reason for the formation of such deposits. Both, the occurrence of fouling and scaling, tend to blockade the membrane for the solvent molecules. This, in turn, results in a decreased permeate output of the system, higher energy costs, shorter purification cycles of the membrane and shorter durability of the membrane.

As indicated, the term "scaling" refers to the formation of particularly inorganic deposits which develop because the solubility of ce-rtain salts being more or less sparingly soluble in water, such as, for example, $CaCO_3$ $Ca_2(PO_4)_3$, alkaline earth metal sulfates, in particular $CaSO_4$ $BaSO_4$ and $SrSO_4$ and/or certain silicates and the like is exceeded in the retentate. The concentration of retained ionic particles in the retentate is particularly increased in the backwater nearby the surface of the membrane, where it can even be up to 20 percent higher than in the bulk retentate.

Use of scale inhibitor chemicals is one approach known for controlling scale formation in reverse osmosis systems. Scale inhibitors are compounds interfering with or disrupting the crystal growth of potentially scale-forming compounds.

The applied dosage of scale inhibitors is usually calculated based on a chemical analysis of the average composition of the aqueous feed medium. The commonly used calculation methods account only some model parameters for scale formation, e.g. the saturation index (SI) of scale forming compounds present in the feed medium and its pH, but disregard other parameters, like e.g. the dependence of the SI from the presence of non scale forming foreign ions, because such parameters are often too complex to be accessible for reliable calculations. Conventional dosing of scale inhibitors is therefore rather inaccurate, and too large a quantity of scale inhibitors is usually used in order to be on the safe side.

Unused scale inhibitor compounds, however, cannot be recycled from the retentate. Furthermore, overdosing of scale inhibitors should also be avoided for environmental reasons. On the other side, if the RO system is run at a relatively high concentration rate, what is normally desired, even a short-time underdosing of the scale inhibitors can almost immediately cause a precipitation of scale on the membrane which is irreversible and cannot be removed again during normal operation of the RO system. Consequently, there is still a strong unmet need for an effective control of the dosage of scale-inhibitors in RO systems.

One method for automatically dosing scale inhibitors in devices for processing a water stream is described in US-Patent 6,053,032. In this method a quartz crystal microbalance (QCM) device directly detects and compares the mass of scale deposited on probes located in the process water stream over a certain period of time. One probe is e.g. situated up-stream from a dosing means for scale inhibitor compounds, a second probe down-stream from said dosing means. By continuously comparing the deposition rate on both probes the QCM device can analyse the efficiveness of the quantity of scale inhibitor present in the system making it possible to operate the dosing means under computer control in a way that it adds scale inhibitor compounds only to the extent they are required for the actual quality of the feed water and to change the dosage if the water quality changes.

US-Patent 6,053,032 does however not mention reverse osmosis systems as possible candidates for applying the disclosed method for scale prevention and it is at least questionable whether this method is fast-acting enough for sufficiently securing the membrane of a reverse osmosis system against scale under normal conditions. Problems with said approach would particularly have to be expected in case of an intermittent underdosing of the scale inhibitor, because, taking into account the detecting principle used in said method, the QCM device can only react after a certain quantity of scale has already been deposited on a probe in the RO system. A corresponding amount of scale would however also deposit on the membrane and irreversibly impair the operation of the membrane, and said impairment would increase steadily with the number of such underdosing events in the system.

It is an object of the present invention to provide a process for treating a feed stream of an aqueous medium, which comprises dissolved potentially scale forming components, in a reverse osmosis (RO) system, in which process the deposition of scale can strongly be reduced or preferably be substantially prevented, and this in a reproducible, safe and simple manner.

The present invention is based on the finding that the addition of modern scale inhibitors, in particular so-called theshold inhibitors, which interfere with the crystal growth of the crystallites of scale forming compounds, to the feed medium of an RO system generally results in a change of the number of fine particles of said scale forming compounds suspended in the retentate, generally in an increase of the number of such particles. This increase is indicative of the membrane protecting efficacy of the scale inhibitor because the scale forming material contained in said particles does not deposit on the membrane but is kept in suspension, in particular colloidal suspension, in the retentate and is thus flushed out from the membrane separator unit together with the retentate. Furthermore, it has been found that said changes in the concentration of these fine particles of scale forming compounds in the retentate can readily be monitored, e.g. by recording changes in the conductivity or turbidity of the retentate associated with said change. Furthermore, under given process conditions the number and size of the particles of scale forming compounds which appear in the retentate after addition of a sufficient amount of scale inhibitor substantially depends on the composition of the feed water stream only, so that it can e.g. experimentally be predetermined for a certain type of feed water, and the addition of scale inhibitor during the treatment of another sample of the same type of feed water can later on be effectively controlled by keeping the number of fine particles or of any measurand related to it in substantially the same dimension as in said preliminary test. Quite surprisingly, even long-term operation of a membrane separation unit under such contol does not substantially affect the efficacy of the unit.

Accordingly the present invention is directed to a process for treating a feed stream of an aqueous medium of a given composition, which comprises dissolved potentially scale-forming components, in a reverse osmosis (RO) system under given process conditions, providing a permeate stream and a stream of a retentate (concentrate) which comprises potentially scale-forming components at a concentration sufficiently high to cause scale formation in those parts of the RO system being in contact with said retentate in the absence of a scale inhibitor, in which process

(a) the retentate is continuously monitored to detect the presence of particles of potentially scale-forming components in said retentate and a reading of one or more physical parameters of the retentate related to the presence of such particles is continuously recorded;

(b) said recorded reading is continuously compared to measurement values for said one or more parameters of a retentate obtained from an aqueous medium of the same composition under the same process conditions which values have empirically been predetermined; and

(c) an amount of scale inhibitor is added to the RO system upstream of the membrane once the recorded reading for the one or more parameters differs from said predetermined measurement values, said amount of scale inhibitor having been empirically predetermined to prevent scale formation under said conditions.

Brief description of the drawings:

Figure 1 shows a flow chart of an RO system suitable for performing a process according to the present invention as used according to the example of the present application.

Figure 2 shows the change of yield

$$\eta = (\text{volume stream permeate})/(\text{volume stream permeate+retentate})$$

with the operation time of the RO system used in the Example when operated without scale inhibitor (antiscalant) or with two typical antiscalants 1 and 2. The higher the yield provided by an RO system the less raw water feed is required for achieving a same permeate volume.

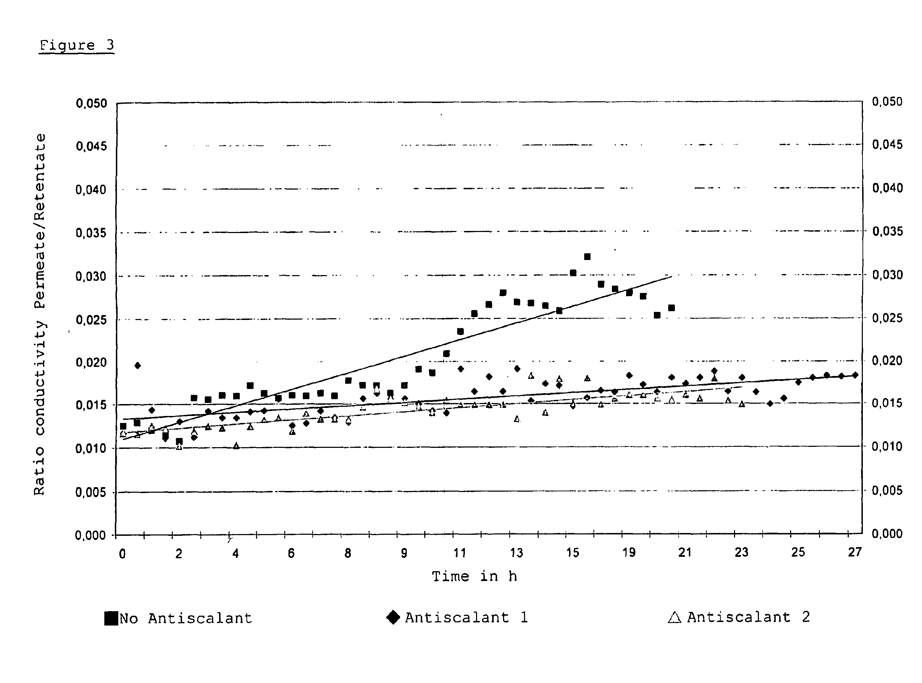

Figure 3 shows the change of the ratio of the electric conductivity of the permeate to the conductivity of the retentate with operation time of the RO system used in the Example when operated without scale inhibitor (antiscalant) or with the said two typical antiscalants.

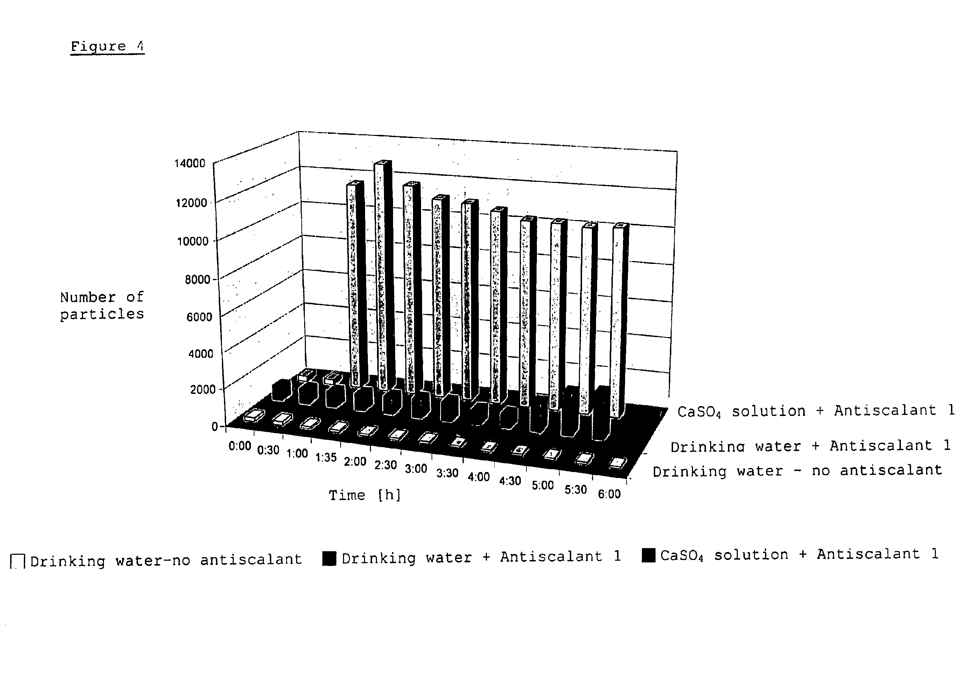

Figure 4 shows the number of particles having a particle diameter of more than 1300 nm found in the retentate for a sample of drinking water as feed medium without antiscalant or the same drinking water with antiscalant 1, or a sample of a calcium sulfate solution with antiscalant 1 as a function of operation time of the RO system.

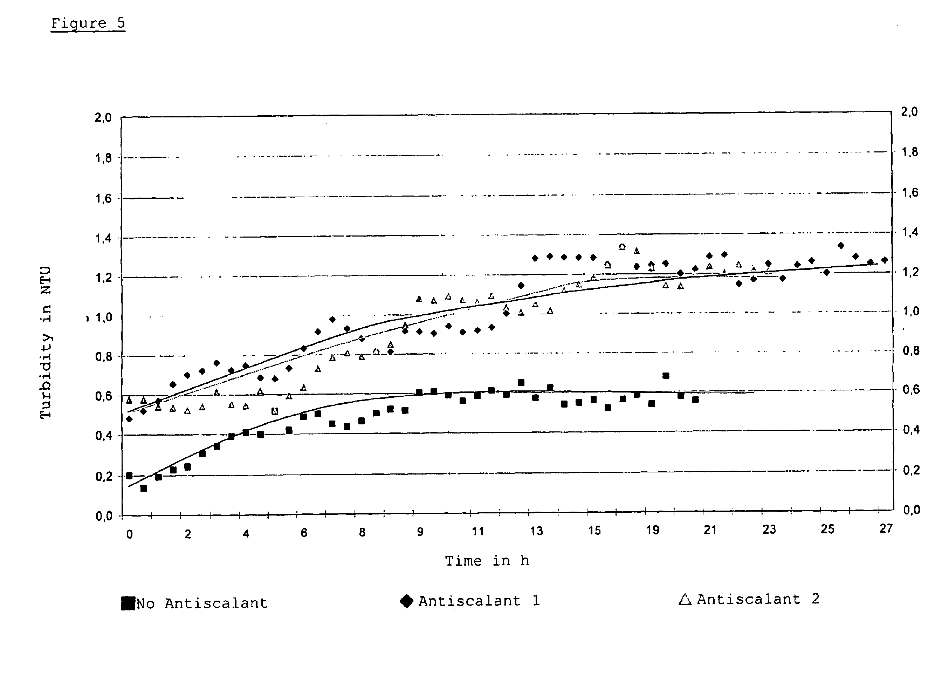

Figure 5 shows the turbidity measured in NTU as a function of operation time of the RO system used according to the Example for an aqueous solution comprising 1g/l calcium sulfate as the feed medium without antiscalant and with addition of 5 ppm antiscalant 1 or antiscalant 2 measured with a Laser Nephelometer FilterTrak™ 660 sc (Hach Company, USA); yield $\eta$ = 0.81 at start of the measurement).

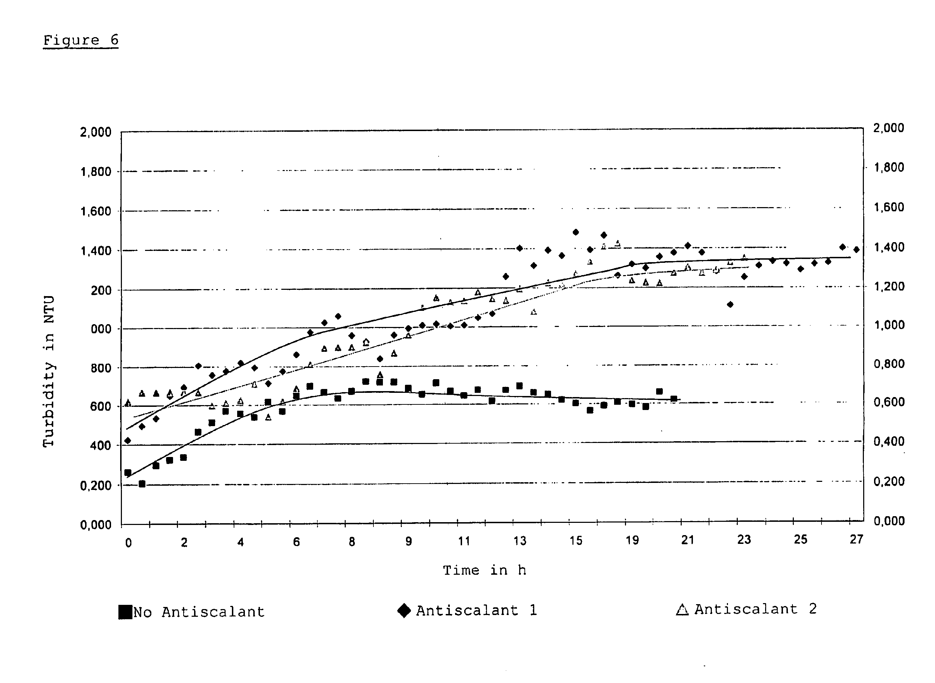

Figure 6 shows for comparison the turbidity measured in NTU as a function of operation time of the RO system used according to the Example for an aqueous solution comprising lg/l calcium sulfate as the feed medium without antiscalant and with addition of 5 ppm antiscalant 1 or antiscalant 2 measured with another device, the 1720E Turbidimeter sc (Hach & Lange); yield $\eta$ = 0.81 at start of the measurement).

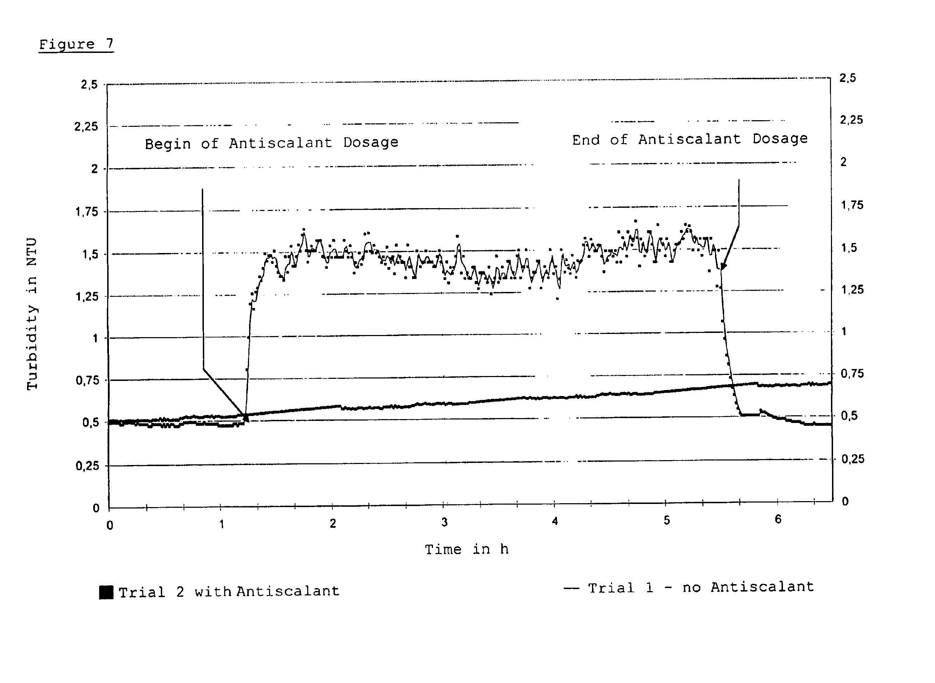

Figure 7 shows a comparison the significant increase of the turbidity of the retentate when 5ppm antiscalant are added after about 1 hour of operation time, which turbidity remains substantially constant as long as the addition of antiscalant continues. However, when the additon of antiscalant is stopped again at about 5.5 hours, turbidity almost immediately drops again to substantially the same level as before the antiscalant addition. For comparison the turbidity measured under the same conditions without dosing any antiscalant is also shown.

For the purposes of this application the term "scale inhibitor" means compounds which can inhibit the precipitation of at least one chemical compound other than calcium carbonate, in particular of calcium sulfate and other alkaline earth metal sulfates, calcium phosphate and calcium fluoride. In particular, mineral acids like e.g. hydrochloric acid and others, which can merely inhibit the formation of calcium carbonate scale due the a shift of the carbonate/hydrogen carbonate equilibrium, are not considered as scale inhibitors herein. On the other side, scale inhibitors according to the present invention could also be used to inhibit the formation of calcium carbonate scale, under certain conditions, in particular if a control of calcium carbonate formation by regulating the pH of the retentate is difficult, e.g. because the retentate comprises major amounts of silicates. If an aqueous medium comprising calcium and carbonate ions is used as the feed in the instant process, which feed medium has a composition allowing to adjust the pH of the retentate to a value of about 7 without the danger that certain compounds dissovlved therein precipitate, this is normally done for reducing or preventing the formation of calcium carbonate scale.

The scale inhibitors of the present invention particularly include so-called threshold inhibitors, i.e. chemical substances delaying or disrupting the growth phase of crystallisation thus inhibiting the formation of crystals, either by preventing the formation of seed crystals being big enough in size to precipitate from the solution or by causing a crytal distortion thus leaving fluffy amorphous crystallites which remain suspended and/or are readily resuspendable so that they can easily be flushed out.

Certain antiscalants comprise in addition dispersing agents creating a charge at the crystallite surfaces thereby keeping the particles in better suspension.

Important classes of compounds useful as scale inhibitors include polyphosphates like sodium hexametaphosphate, and polyphosphonates which are in many cases superior to polyphosphates due to their improved hydrolytic behavior and which include e.g. aminotri(methylenephosphonic acid) (AMP/ATMP); diethylenetriamine penta(methylenephosphonic acid) (DTPMP); phosphonobutane-1,2,4-tricarbonic acid (PBTC) and 1-hydroxyethane-(1,1-diphosphonic acid) (HEDP). Degradation of polyphosphonates is still rather difficult.

Further antiscalants which are suitable for practising the present invention are based on polyacrylic acid (PAA), polymethacrylic acid (PMAA) and/or polymaleic acid (PMA) polymers. Polyacrylic acids of a molar mass of 1000 to 3000 g/mol are useful because of their threshold effect; of a molar mass of 5000 to 10000 because of their ability to cause an distortion effect; and of a molar mass of 20000 and more, e.g. 20000 to 40000 as dispersing agents. The mentioned polyacids are also charactarized by a good hydrolytic behavior as compared to polyphosphates.

The quantity of antiscalant required depends on the specific type of feed water, in particular on the type of chemical compounds dissolved therein, the degree of concentration of the retentate, the process temperature and other parameters known to a person skilled in this art. A suitable quantity can be determined and/or optimized by a person of usual skill with a few, simple experiments, if necessary. Antiscalants like those described are generally used at a concentration of up to 25 ppm, e.g. 1 to 15 ppm, preferably 2 to 10 ppm, most preferably 2 to 7 ppm.

Numerous scale inhibitors or antiscalants like those mentioned above are commercially available, for example from ROPUR AG and Toray Membranes Europe.

The presence of particles of potentially scale-forming components in said retentate can be detected in several ways, in particular by continuously monitoring the turbidity of the retentate and/or the number of particles in the retentate preferably those having a particle size of 100 to 2000 nm, more preferably a particle size of 1000 to 2000 nm, in particular of 1300 to 2000 nm. Optionally the conductivity and/or the pH of the retentate is used as one further physical parameter, in addition to turbidity and/or the number of particles in the retentate having a particle size as specified above.

Turbidity has been used for many years for monitoring the combined quantity of particulate material in water samples. Turbidity is not a physically well-defined parameter but rather an optic impression. As generally known in the art, turbidity is caused by absorption and scattering of light caused by particles of suspended solids and/or colloidal material distributed in the liquid medium and having an average diameter up to about the wavelength of the scattered light or radiation. The measurement of turbidity or haze is usually based on the Tyndall effect which is indicative of the presence of particles having a particle size between about 100 to 2500 nanometers in the liquid.

Different measuring units are commonly in use for turbidity/haze, the most common being the so-called Nephelometric Turbidity Unit (NTU). The internationally adopted standard is the Formazine Turbidity Unit (FTU) which is identical to 1 NTU; 1 FNU (Formazine Nephelometric Unit); 1 TE/F. The units can also readily be converted to other common units for the turbidity like EBC (European Brewery Convention; 1 NTU = 4 EBC) or ASBC (American Society of Brewing Chemists; 1 NTU = 0.057 ASBC).

As already mentioned above, it has been found that the turbidity of the retentate achieved by addition of scale inhibitor substances depends under given process conditions in particular on the specific feed water composition. In general, the turbidity of the retentate ranges obtained by the addition of a quantity of scale inhibitor effective to safely prevent the formation of scale on the membrane of the membrane separation unit to a usual feed water ranges from 0.1 to about 100 NTU, frequently from 0.5 to 25 NTU, e.g. from 0.5 to 10, in particular from 0.5 to 5.

Suitable devices for the continuous measurement of the turbidity in the retentate are known and commercially available. The specific design of the device for measuring the turbidity is not particularly critical. Without wanting to be restricted to the use of specific devices for measuring the turbidity, the following two commercially available devices shall be mentioned as suitable examples for carrying out the process of the present invention:

> FilterTrak™ 660 sc is a Laser Nephelometer of Hach Company (USA) is a device particularly suitable for the continuous measurement of turbidities ranging from 0.001 to 5000 mNTU. The device uses a laser diode with a radiation of 660 nm and 90 degree detection.

The "1720E Turbidimeter sc" is another suitable device of Hach & Lange particularly useful for the detection of turbidities ranging from very low to medium values, in particular from 0.0001 to 100 NTU. Radiation source is a white light tungsten filament bulb having a color temperature of from 2200 to 3000 K. 90 degree detection according to US-EPA 180.1 is used. Its metering precision is +/- 2% for measured values up to 10 NTU, +/- 5% for turbidities ranging from 10 to 40 NTU and +/- 10% for measured values from 40 to 100 NTU.

A further method for monitoring the retentate for presence of particles of potentially scale-forming components is the direct measurement of the number of particles in the retentate, in particular of those having a particle size of 1000 to 2000 nm, more preferably 1300 to 2000 nm using a water particle counter.

Water particle counters are known, commercially available and have e.g. been used in water treatment for detecting pathogenic microorganism in potable water, like e.g. Cryptosporidium. Light blocking particle counters are the most commonly used types in potable water applications today. A particle monitor consists of a sampling tube, an infrared light-emitting diode (LED) and photodetector. A narrow light beam from the LED is transmitted through a flowing sample. Fluctuations in the light beam are measured by the photodetector. Particles in the sample stream cross the laser beam blocking a portion of the light, thus creating a moment of diminished light and a corresponding electronic signal pulse. This pulse is proportional to the size of the particles and is measured in height and tabulated according to its respective particle size. At the end of the sample period the counts for each specified particle size range are totaled and the particle counts are calculated and presented on a count per milliliter basis. Thus, optical particle counters furnish a direct measurement of physical parameters, i.e. particle counts per milliliter of sample, categorized by particle size range.

A very suitable water particle counter for use in the present invention is the WPC-21 of Hach & Lange which allows a continous tracing of the number of particles of a size of 1300 nm and more, e.g. particles of a size ranging from 1300 to 2000nm.

In addition to turbidity and fine particle number as described above, it can be of advantage to monitor certain other physical parameters of the retentate, in particular the conductivity of the retentate, more particularly in combination with a simultaneous continuous recording of the conductivity of the permeate stream. The ratio of permeate conductivity to retentate conductivity normally increases during the opeartion of an RO system because with increasing operation time of the system the membrane's ability to hold back certain ions in the retentate decreases due to a deterioration of the membrane material caused by the scale deposition. Therefore said ratio allows a control of the speed of scale deposition and a rating of the current state of the membrane. Adding suitable quantities of scale inhibitor leads to a significant reduction of the increase of said ratio over the operation time.

In a further preferred embodiment, the pH value of the retentate is monitored in addition to turbidity and/or the number of particles in the retentate having a particle size of 100 to 2000 nm, and optionally the conductivity of the retentate.

It is known that the pH value of the retentate is one of the main factors influencing the probability of calcium carbonate precipitation. At a pH of the retentate of about 7 the carbonate/hydrogen carbonate equilibrium is entirely on the side of hydrogen carbonate, so that the formation of calcium carbonate scale can be reduced or substantially suppressed without necessity to add scale inhibitors for this purpose. The composition of the feed must however allow to run the process at such a pH of the retentate, the feed medium must e.g. be free or substantially free of silicates in order to proceed in this way.

In a preferred embodiment of the process according to the invention the addition and/or quantity of scale inhibitor required is controlled automatically with a computer device, based on the recorded readings for said one ore more physical parameters.

The determination of a suitable quantity of a specific scale inhibitor may be based on results of an empirically predetermined correlation between the concentration and particle size of one or more specific scale forming compounds comprised in said retentate which is e.g. deducible from the monitored parameters, e.g. the turbidiy of the retentate, and the risk that said compounds tend to form scale deposits under such conditions. Such empirical correlations can be elaborated by a person of ordinary skill in the art for specific scale forming compound, in particular the important ones, such as $CaCO_3$, $CaSO_4$ $BaSO_4$, $SrSO_4$, $CaF_2$, $Ca_3(PO_4)_2$ or sparingly soluble iron compounds, like iron oxide hydrates or silicates like magnesium silicate. Furthermore empirically predetermined correlations could also include correlations between the specific scale forming compounds dissolved in the retentate and the efficacy of specific scale inhibitor compounds just in the presence of these compounds being dissolved in the retentate. Said pre-determied empirical correlation(s) can e.g. be included into the determination of the appropriate quantity of scale inhibitor by use of software designed for said purpose, which is e.g. run on the computer device for determining the appropriate quantity of scale-forming compounds and/or controlling the addition thereof to the RO system.

In a further specific embodiment of the process according to the present invention the turbidity of the retentate is the only physical parameter related to the presence of particles of potentially scale-forming components in said retentate which is used for control of the dosing of the antiscalant.

In still another aspect the invention relates to a reverse osmosis (RO) system comprising

(1) a membrane separator unit providing a permeate stream and a retentate stream from a feed stream of an aqueous medium;

(2) means for continuously recording a reading of one or more physical parameters of the retentate related to the presence of particles of potentially scale forming substances in the retentate;

(3) means for continuously comparing said recorded reading to measurement values for said one or more parameters of a retentate obtained from an aqueous medium of the same composition under the same process conditions which values have experimentally been predetermined; and

(4) means for automatically adding a quantity of scale inhibitor to the RO system located upstream of the membrane, said quantity having been experimentally predetermined to prevent scale formation under said conditions.

Suitable reverse osmosis system may have different forms. They comprise at least one membrane separation unit with membrane filter a of arbitrary shape, e.g. a candle filter. The membrane unit comprises an inlet conduit for the aqueous feed medium with a high-pressure pump e.g. a rotary pump. Connected to the inlet conduit is a storage tank for the scale inhibitor substance comprising a control valve for feeding controlled quantities of scale inhibitor compounds from the tank to the aqueous feed medium. Furthermore the membrane unit comprises an outlet conduit for the permeate stream and for the retentate stream, from which latter optionally a further conduit for a runback stream of retentate to the inlet conduit may diverge. The retentate conduit comprises one or more probes for monitoring the retentate in order to detect the formation and/or the presence of particles of the potentially scale forming compounds. As mentioned above, suitable probes include continuous turbidity measurement probes or continuous (online) particle counters which are commercially available in different forms. Furthermore probes for monitoring the pH of the retentate as well as the electric conductivity of retentate and/or permeate may advantageously be present. The probes monitor the respective parameters continuously and provide corresponding data to a suitable computer device which controls the control valve for scale inhibitor substances based on the data provided by the probes. The concentration rate, i.e. the quotient of permeate volume stream and feed volume stream is normally above 0.75 and preferably above 0.85, e.g. 0.85 to 0.99. In the above described RO system the concentration rate can be readily controlled by regulating the backflow of retentate to the inlet conduit with appropriate control valves.

<u>Example:</u>

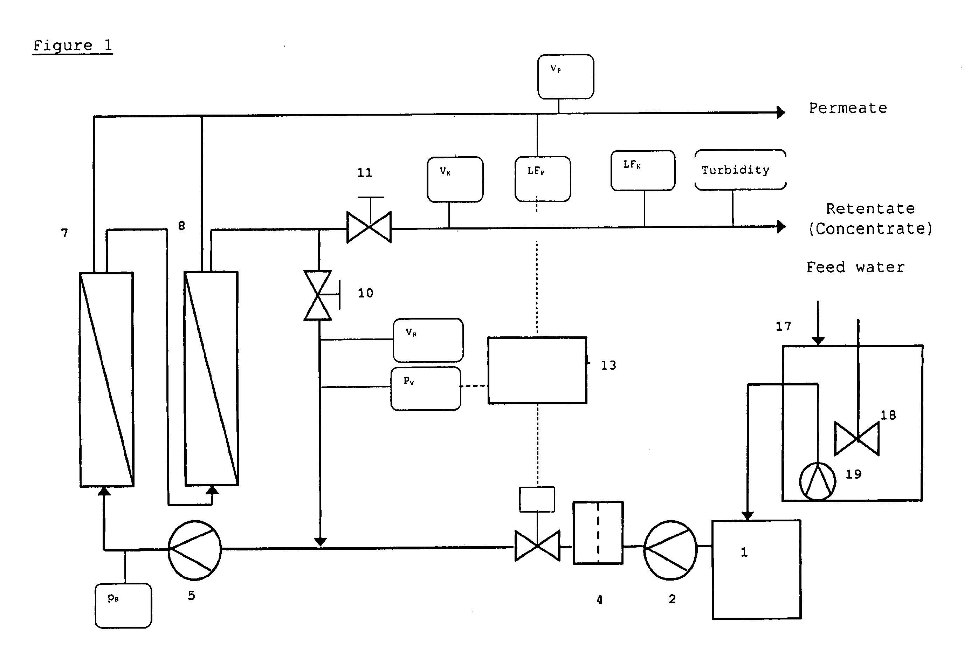

An RO system according to <u>Figure 1</u> is used. The aqueous feed medium is taken from a storage container (1) using a primary pressure pump (2) (HVA 1100N Top Line from Elektra Beckum). Then the feed medium passes a fine filter (4) and is supplied to the high pressure pump (5) via a selenoid valve. The fine filter removes all suspended substances of a size of more than 5 microns from the feed stream thereby protecting the components of the system downstream of the filter from fouling and sediments. The high pressure pump provides a pressure of about 10 to 16 bar under which the feed medium is supplied to two membrane separation units (7 and 8) being arranged thus that the concentrate stream of the first unit forms the feed stream of the second unit. Polyamide thin film composite spiral wound modules are used as membrane elements.

The electric conductivity of the permeate ($LF_p$) is measured (here with a measurement and control device OS 3050 from EWS Equipment for Water Treatment Systems International B.V.; (13)).

Furthermore measured is the temperature of the permeate to be able to compensate the measured conductivities for the temperature.

Furthermore the device comprises a pressure gauge for controlling the pressure before the high pressure pump ($p_v$) and another one for control of the current operating pressure ($P_B$).

A concentrate return valve (10) allows the adjustment of the quantity of concentrate to be returned to the high pressure pump. It is necessary because the membrane module requires a substantial overflow for working correctly, meaning that the quantity of feed water substantially exceeds the actual yield of permeate.

The quantity of concentrate removed from the system and thus the yield $\eta$ is controlled via the concentrate valve (11).

The system furthermore comprises three flow meters for either the concentrate ($V_k$) the permeate ($V_p$) and the returned concentrate ($V_r$) .

To allow a continuous operation of the system and simultaneously to influence the feed water composition using different additives (antiscalants, bases etc.) the system comprises a second supply container of 200 1 volume (17) equipped with a stirrer (18) and a submerged pump (19). The stirrer (RZR 2100 electronic from Heidolph) allows a uniform blending. The submerged pump (drainage pump KWP 250 from Schwarzbach) with a maximum delivery height of 6 m and a maximum delivery volume of 7500 l/h allows to convey the raw solution to the first container (1).

The RO system is equipped with devices for continuous measurement of the turbidity and the electric conductivity ($LF_K$) in the retentate stream.

A microprocessor conductometer LF 196 from WTW GmbH or, as an alternative, the measurement and control device OS 3050 (13) extended by a conductivity sensor are used for measuring the conductivity.

For measuring the turbidity two different devices have been used, device A which is a Laser Nephelometer FilterTrak™ 660 sc of Hach Company already described above, and device B, a "1720E Turbidimeter sc" from Hach & Lange also described above.

<u>Test conditions:</u>

| | |
|---|---|
| Model waste water used as feed medium: | Aqueous solution of calcium sulfate with an initial concentration of lg/l of calcium sulfate |
| Volume stream of the model waste water: | 1401/h |
| Initial yield $\eta$: | 0.81 |
| Antiscalants: | Antiscalant 1: RPI-3000A at a concentration of 5ppm |
| | Antiscalant 2: RPI-6000 at a concentration of 5ppm |

RPI-3000A (Toray Membranes Europe AG) is specifically suitable for use with polyamide, polyether-and cellulose acetate membranes with anionic surface charge. RPI-3000A is based on a synergistic mixture of organophosphates and low molecular polymers. RPI-3000A is especially suitable for use with calcium sulfate and/or calcium carbonate containing waters and has also a very good stability effect on barium and strontium sulfates. The dispersing agent comprised in RPI-3000A furthermore prevents the deposition of metal oxides and the occurrence of organic fouling.

RPI-6000 (Toray Membranes Europe AG) is a scale inhibitor specifically developed for aqueous systems with a very high sulfate content (> 15000 mg/l). Furthermore it has a high efficacy against calcium carbonate scaling and the deposition of metal oxides. It can be used with polyamide, polyether and cellulose acetate membranes with negative or neutral surface charge, and is based on a blend of anionic phosphonates.

The following process parameters are determined:

- the volume streams of permeate and retentate;
- the conductivity of permeate and retentate;
- the turbidity of the retentate;
- the particle concentration and/or particle number in the retentate.

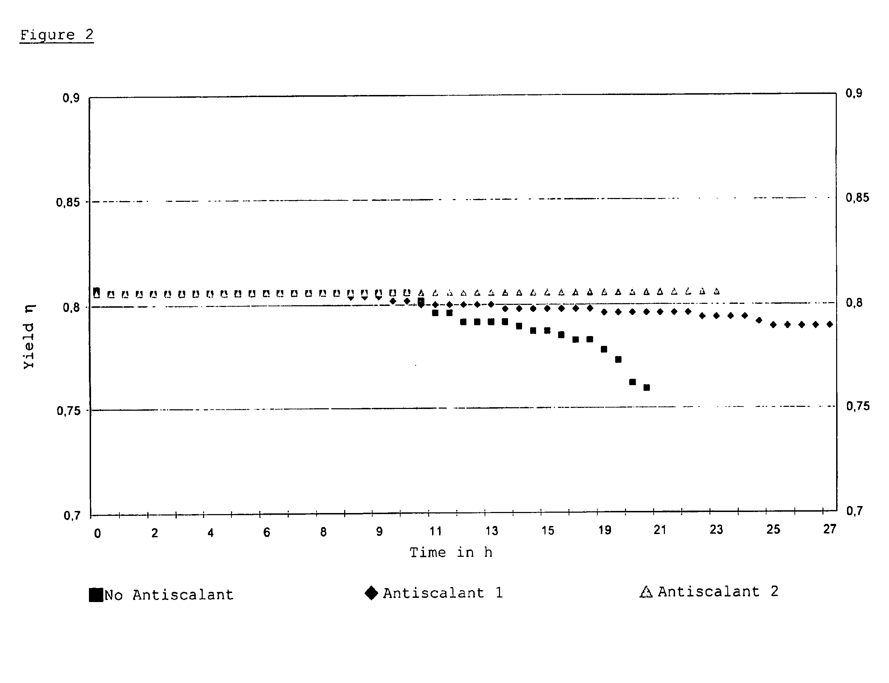

The temporal change of the mentioned parameters during a run of said RO system is shown in Figures 2 to 7.

Figure 2 shows that the yield η decreases significantly after c. 10 hours without use of antiscalants. This is caused by the deposition of a scale coating covering the membranes.

The very same effect is also evident from the graphic depiction of the ratio of the conductivity of the permeate to that of the retentate in Figure 3. Caused by the deposition of scale on the membranes the selectivity of the membranes decreases and their permeability for ions increases because of a degradation of the membrane structure caused by the scaling materials.

The effects of an addition of antiscalants to the system in the retentate and strategies for an efficient control of scaling based on said effects are evident from Figures 4 to 7. The concentration of scale particles in the retentate increases after addition of scale inhibitor. Without wanting to be restricted to this explanation, this is probably the case because antiscalants like in particular threshold inhibitors like those described in more detail above influence the colloidal scale particles in the retentate thus that an interaction of the particles with the surface of the membrane is substantially reduced or entirely prevented so that scale does not or only to a very reduced extent deposit on the membrane and is flushed out of the RO system with the retentate stream thus leaving the system without impairment.

From Figure 5 e.g. one can in particular see that without addition of antiscalant a certain turbidity can be observed increasing in the Example from about 0.2 NTU to about 0.6 NTU during the first 10 hours but remaining constant (or even decreasing) later on (Figure 5, lower curve), this phase of constancy coinciding with the formation of scale deposits on the membrane surface (cf. Figure 2). The two upper curves in Figure 5 show the turbidity development in the retentate when working under the same process condition except, however, that antiscalant is used. Turbidity values are much higher in this case (about 0.6 to 1.2 NTU during the first 27 hours) associated with a strongly reduced scale deposit on the membrane as evident again from Figure 2. This shows that the turbidity of the retentate is a useful physical parameter and process variable for controlling the formation of scale on the membrane by administring scale inhibitor compounds to the system.

Figure 6 shows the same picture as described above with regard to Figure 5, and shows that the results are independent from the specific device used for the turbidity measurement.

Figure 4 shows that measuring the number for fine particles in a RO retentate with a particle counter is also suitable for control of scale deposits on the membrane of the RO system.

Figure 7 shows once more how to use the turbidity of the retentate according to the present invention as a control parameter for avoiding scale formation in a RO system. Whereas trial 1 to which Figure 7 refers is performed without dosage of antiscalant, 5 ppm of Antiscalant 1 are added after about 1 hour of RO system operation during trial 2. Said addition of Antiscalant 1 gives rise to a significant inrease in turbidity of about 1 NTU. After about 5.5 hours the dosage of antiscalant to the system is again terminated and turbidity drops down again to its initial level. This shows again that turbidity in the retentate is a suitable control parameter for the presence of antiscalant in the system. For establishing a suitable control strategy, it is only necessary to determine the difference in turbidity under certain given process conditions, in particular composition of the feed water stream, the desired degree of concentration, the desired yield and so on. This can be simply achieved e.g. by running the RO system under said given process conditions, once with a certain antiscalant and then without antiscalant, and measuring the turbidity in both cases. The measurable difference in turbidity has been found to be a reproducible and reliable process parameter under given process conditions as already mentioned above.

**Claims**

**1.** A process for treating a feed stream of an aqueous medium of a given composition, which comprises dissolved potentially scale-forming components, in a reverse osmosis (RO) system under given process conditions, providing a permeate stream and a stream of a retentate (concentrate) which comprises potentially scale-forming components at a concentration sufficiently high to cause scale formation in those parts of the RO system being in contact with said retentate in the absence of a scale inhibitor, in which process

(a) the retentate is continuously monitored to detect the presence of particles of potentially scale-forming components in said retentate and a reading of one or more physical parameters of the retentate related to the presence of such particles is continuously recorded;
(b) said recorded reading is continuously compared to measurement values for said one or more parameters of a retentate obtained from an aqueous medium of the same composition under the same process conditions which values have experimentally been predetermined; and

(c) an amount of scale inhibitor is added to the RO system upstream of the membrane once the recorded reading for the one or more parameters differs from said predetermined measurement values, said amount of scale inhibitor having been experimentally predetermined to prevent scale formation under said conditions.

2. A process according to claim 1, wherein the turbidity of the retentate is used as one of said physical parameters.

3. A process according to claim 1 or 2, wherein the number of particles in the retentate having a particle size of 100 to 2000 nm is used as one of said physical parameters.

4. A process according to any one of claims 1 to 3, wherein the turbidity and the number of particles in the retentate having a particle size of 100 to 2000 nm are used as two of said physical parameters.

5. A process according to any one of claim 2 to 4, wherein the conductivity of the retentate is used as one further physical parameter, in addition to turbidity and/or the number of particles in the retentate having a particle size of 100 to 2000 nm.

6. A process according to any one of claim 2 to 5, wherein the pH of the retentate is used as one further physical parameter, in addition to turbidity and/or the number of particles in the retentate having a particle size of 100 to 2000 nm.

7. A process according to any one of claims 3 to 6, wherein the number of particles in the retentate having a particle size of 1000 to 2000 nm, in particular of 1300 to 2000nm, is measured.

8. A process according to claim 2, wherein the turbidity of the retentate is used as the only physical parameter.

9. A process according to any one of claims 1 to 8, wherein the addition of scale inhibitor is controlled automatically with a computer device, based on the recorded readings for said one ore more physical parameters.

10. A process according to any one of claims 1 to 9, wherein the quantity of scale inhibitor added is determined on basis of an empirically predetermined correlation between the concentration of one or more specific scale forming compounds in said retentate and the risk of scale-formation associated with said one or more specific compounds.

11. A process according to any one of claims 1 to 10, wherein the potentially scale forming compounds include $CaCO_3$ $CaSO_4$ $BaSO_4$ $SrSO_4$ $CaF_2$, $Ca_3(PO_4)_2$, sparingly soluble iron compounds and silicates.

12. A process according to any one of claims 1 to 11, wherein the scale inhibitor comprises a surface active compound.

13. A reverse osmosis (RO) system comprising

(1) a membrane separator unit providing a permeate stream and a retentate stream from a feed stream of an aqueous medium;
(2) means for continuously recording a reading of one or more physical parameters of the retentate related to the presence of particles of potentially scale forming substances in the retentate;
(3) means for continuously comparing said recorded reading to measurement values for said one or more parameters of a retentate obtained from an aqueous medium of the same composition under the same process conditions which values have experimentally been predetermined; and
(4) means for automatically adding a quantity of scale inhibitor to the RO system located upstream of the membrane, said quantity having been experimentally predetermined to prevent scale formation under said conditions.

**Patentansprüche**

1. Verfahren zur Behandlung eines Zustroms eines wässrigen Mediums mit einer gegebenen Zusammensetzung, welches gelöste, potentiell ablagerungsbildende Bestandteile enthält, in einem System zur inversen Osmose (IO) unter gegebenen Verfahrensbedingungen, welche einen Permeatstrom und einen Strom eines Retentats (Konzentrats) bereitstellt welcher potentiell ablagerungsbildende Bestandteile in einer Konzentration enthält die, in Abwesenheit eines Ablagerungsinhibitors, hoch genug ist die Bildung von Ablagerungen in den Teilen des IO-Systems zu verursachen die in Kontakt mit dem Retentat sind, wobei im Verfahren

(a) das Retentat kontinuierlich überwacht wird um die Anwesenheit von Partikeln potentiell ablagerungsbildender Bestandteile im Retentat festzustellen und die Messung eines oder mehrerer physikalischer Parameter des Retentats, das mit der Anwesenheit solcher Partikel zusammenhängt kontinuierlich aufgezeichnet wird;

(b) der so aufgezeichnete Messwert kontinuierlich mit gemessenen Werten für diesen einen oder mehrere Parameter des Retentats verglichen wird, die mit einem wässrigen Medium der gleichen Zusammensetzung unter den gleichen Verfahrensbedingungen erhalten wurden deren Werte experimentell vorbestimmt waren; und

(c) eine Menge Ablagerungsinhibitor der Membran vorangehend in das RO-System zugegeben wird, sobald der aufgezeichnete Messwert für den einen oder mehrere Parameter von den vorbestimmten Messwerten abweicht, wobei die Menge Ablagerungsinhibitor zur Verhinderung der Bildung von Ablagerungen unter diesen Bedingungen experimentell vorbestimmt wurde.

2. Verfahren gemäss Anspruch 1, wobei die Trübung des Retentats als einer dieser physikalischen Parameter verwendet wird.

3. Verfahren gemäss Anspruch 1 oder 2, wobei die Partikelanzahl im Retentat mit einer Teilchengrösse von 100 bis 2000 nm als einer dieser physikalischen Parameter verwendet wird.

4. Verfahren gemäss einem der Ansprüche 1 bis 3, wobei die Trübung und die Partikelanzahl im Retentat mit einer Teilchengrösse von 100 bis 2000 nm als zwei dieser physikalischen Parameter verwendet werden.

5. Verfahren gemäss einem der Ansprüche 2 bis 4, wobei die Leitfähigkeit des Retentats als ein weiterer physikalischer Parameter verwendet wird, zusätzlich zur Trübung und/oder der Partikelanzahl im Retentat mit einer Teilchengrösse von 100 bis 2000 nm.

6. Verfahren gemäss einem der Ansprüche 2 bis 5, wobei der pH des Retentats als ein weiterer physikalischer Parameter verwendet wird, zusätzlich zur Trübung und/oder der Partikelanzahl im Retentat mit einer Teilchengrösse von 100 bis 2000 nm.

7. Verfahren gemäss einem der Ansprüche 3 bis 6, wobei für die Anzahl von Partikeln mit einer Teilchengrösse von 1000 bis 2000 nm, insbesondere von 1300 bis 2000nm, im Retentat gemessen wird.

8. Verfahren gemäss Anspruch 2, wobei die Trübung des Retentats als der einzige physikalische Parameter verwendet wird.

9. Verfahren gemäss einem der Ansprüche 1 bis 8, wobei die Zugabe an Ablagerungsinhibitor automatisch mit einer Computervorrichtung geregelt wird, ausgehend von den aufgenommenen Messwerten für die ein oder mehreren physikalischen Parameter.

10. Verfahren gemäss einem der Ansprüche 1 bis 9, wobei die Menge zugegebenen Ablagerungsinhibitors bestimmt wird auf Basis einer empirisch vorermittelten Korrelation zwischen der Konzentration einer oder mehrerer spezifischer ablagerungsbildender Verbindungen im Retentat und dem Risiko der mit diesen ein oder mehreren spezifischen Verbindungen verbundenen Ablagerungen.

11. Verfahren gemäss einem der Ansprüche 1 bis 10, wobei die potentiell ablagerungsbildenden Verbindungen $CaCO_3$, $CaSO_4$, $BaSO_4$, $SrSO_4$, $CaF_2$, $Ca_3(PO_4)_2$, geringfügig lösliche Eisenverbindungen und Silikate einschliessen.

12. Verfahren gemäss einem der Ansprüche 1 bis 11, wobei der Ablagerungsinhibitor eine oberflächenaktive Verbindung umfasst.

13. Ein Inversosmose-(IO)-System umfassend

(1) eine Membran-Trennvorrichtung die aus einem Zustrom eines wässrigen Mediums einen Permeatstrom und einen Retentatstrom bereitstellt;

(2) Mittel zur kontinuierlichen Aufzeichnung eines Messwerts eines oder mehrerer physikalischer Parameter des Retentats die mit der Anwesenheit von Partikeln potentiell ablagerungsbildender Substanzen im Retentat in Verbindung stehen;

(3) Mittel zum kontinuierlichen Vergleichen der aufgenommenen Messwerte mit Messwerten der ein oder mehreren Parameter eines Retentats die mit einem wässrigen Medium der gleichen Zusammensetzung unter den gleichen Verfahrensbedingungen erhalten wurden, wobei diese Werte experimentell vorbestimmt wurden; und

(4) Mittel zur automatischen Zuführung einer Menge Ablagerungsinhibitor in das IO-System stromaufwärts der Membran, wobei diese Menge experimentell vorbestimmt wurde zur Verhinderung der Bildung von Ablagerungen unter diesen Bedingungen.

**Revendications**

1. Procédé pour traiter un courant entrant d'un milieu aqueux d'une composition donnée, qui comprend des composants dissous formant potentiellement du tartre, dans un système à osmose inverse (OI) sous des conditions de traitement données, en fournissant un courant de perméat et un courant de rétentat (concentré) qui comprend des composants formant potentiellement du tartre à une concentration suffisamment élevée pour provoquer la formation de tartre dans celles des parties du système OI qui sont en contact avec ledit rétentat en l'absence d'un inhibiteur de tartre, procédé dans lequel

(a) le rétentat est continuellement surveillé pour détecter la présence de particules de composants formant potentiellement du tartre dans ledit rétentat, et une lecture d'un ou plusieurs paramètres physiques du rétentat en relation avec la présence de telles particules est continuellement enregistrée ;

(b) ladite lecture enregistrée est continuellement comparée à des valeurs de mesure pour lesdits un ou plusieurs paramètres d'un rétentat obtenu à partir d'une solution aqueuse de la même composition sous les mêmes conditions de traitement, ces valeurs ayant été expérimentalement prédéterminées ; et

(c) on ajoute une quantité d'inhibiteur de tartre au système OI en amont du diaphragme une fois que la lecture enregistrée pour lesdits un ou plusieurs paramètres diffère desdites valeurs de mesure prédéterminées, ladite quantité d'inhibiteur de tartre ayant été expérimentalement prédéterminée pour empêcher la formation de tartre sous lesdites conditions.

2. Procédé selon la revendication 1, dans lequel la turbidité du rétentat est utilisée comme l'un desdits paramètres physiques.

3. Procédé selon la revendication 1 ou 2, dans lequel le nombre de particules dans le rétentat ayant une taille de particules de 100 à 2000 nm est utilisé comme l'un desdits paramètres physiques.

4. Procédé selon l'une quelconque des revendications 1 à 3, dans lequel la turbidité et le nombre de particules dans le rétentat ayant une taille de particules de 100 à 2000 nm sont utilisés comme deux desdits paramètres physiques.

5. Procédé selon l'une quelconque des revendications 2 à 4, dans lequel la conductivité du rétentat est utilisée comme un autre paramètre physique, en addition à la turbidité et/ou au nombre de particules dans le rétentat ayant une taille de particules de 100 à 2000 nm.

6. Procédé selon l'une quelconque des revendications 2 à 5, dans lequel le pH du rétentat est utilisé comme autre paramètre physique, en addition à la turbidité et/ou au nombre de particules dans le rétentat ayant une taille de particules de 100 à 2000 nm.

7. Procédé selon l'une quelconque des revendications 3 à 6, dans lequel le nombre de particules dans le rétentat ayant une taille de particules de 1000 à 2000 nm, en particulier 1300 à 2000 nm, est mesuré.

8. Procédé selon la revendication 2, dans lequel la turbidité du rétentat est utilisée comme unique paramètre physique.

9. Procédé selon l'une quelconque des revendications 1 à 8, dans lequel l'addition d'inhibiteur de tartre est commandée automatiquement avec un dispositif à ordinateur, en se basant sur les lectures enregistrées pour lesdits un ou plusieurs paramètres physiques.

10. Procédé selon l'une quelconque des revendications 1 à 9, dans lequel la quantité d'inhibiteur de tartre ajouté est déterminée en se basant sur une corrélation empiriquement prédéterminée entre la concentration d'un ou plusieurs composés spécifiques formant du tartre dans ledit rétentat et sur le risque de formation de tartre associé auxdits un ou plusieurs composés spécifiques.

**11.** Procédé selon l'une quelconque des revendications 1 à 10, dans lequel les composés formant potentiellement du tartre incluent $CaCO_3$, $CaSO_4$, $BaSO_4$, $SrSO_4$, $CaF_2$, $Ca_3(PO_4)_2$, des composés de fer à peine solubles et des silicates.

**12.** Procédé selon l'une quelconque des revendications 1 à 11, dans lequel l'inhibiteur de tartre comprend un composé actif en surface.

**13.** Système à osmose inverse (OI) comprenant

(1) une unité de séparation à diaphragme fournissant un courant de perméat et un courant de rétentat depuis un courant entrant d'un milieu aqueux ;
(2) des moyens pour enregistrer continuellement une lecture d'un ou plusieurs paramètres physiques du rétentat en relation avec la présence de particules de substances formant potentiellement du tartre dans le rétentat ;
(3) des moyens pour comparer continuellement ladite lecture enregistrée à des valeurs de mesure pour lesdits un ou plusieurs paramètres d'un rétentat obtenues d'un milieu aqueux de la même composition sous les mêmes conditions de traitement, ces valeurs ayant été expérimentalement prédéterminées ; et
(4) des moyens pour ajouter automatiquement une quantité d'inhibiteur de tartre au système OI, situés en amont du diaphragme, ladite quantité ayant été expérimentalement prédéterminée pour empêcher la formation de tartre sous lesdites conditions.

Figure 1

V$_P$

Permeate

11    V$_K$    LF$_P$    LF$_K$    Turbidity

Retentate
(Concentrate)

Feed water

7    8    10

V$_R$    17

P$_V$    13    18

19

p$_B$    5    4    2    1

Figure 2

Figure 3

Figure 4

Number of particles vs Time [h]

Legend: Drinking water–no antiscalant; Drinking water + Antiscalant 1; CaSO₄ solution + Antiscalant 1

CaSO₄ solution + Antiscalant 1
Drinking water + Antiscalant 1
Drinking water – no antiscalant
CaSO₄ solution + Antiscalant 1

Figure 5

Figure 6

Figure 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6053032 A